# EUROPEAN PATENT SPECIFICATION

(11) **EP 3 455 569 B1**
(45) Date of publication and mention of the grant of the patent: **30.12.2020**
(21) Application number: 17727022.0
(22) Date of filing: 09.05.2017
(51) Int. Cl.: F26B 21/00, B60S 3/00, F26B 21/12, F04D 27/00

(54) **A MECHANISM FOR SELECTIVELY OPENING/CLOSING AN AIR BLOWER INLET OPENING**
EINRICHTUNG ZUM ÖFFNEN/SCHLIESSEN EINER GEBLÄSE-EINTRITTSÖFFNUNG
MÉCHANISME POUR OUVRIR/FERMER L'ADMISSION D'UN VENTILATEUR

(30) Priority: 09.05.2016 US 201662333507 P; 08.05.2017 US 201715589401
(43) Date of publication of application: 20.03.2019
(73) Proprietor: Washme Properties, LLC, Northville, MI 48167 (US)
(72) Inventor: BELANGER, Michael, J., Northville MI 48167 (US); TURNER, Barry, S., Novi MI 48375 (US); TOGNETTI, David, L., Howell MI 48843 (US)
(74) Representative: Monzón de la Flor, Luis Miguel
(86) International application number: PCT/US2017/031752
(87) International publication number: WO 2017/196841

(56) References cited:
- WO-A1-91/04840
- WO-A1-2013/074503
- WO-A2-2016/041024
- US-A1- 2006 218 818
- US-A1- 2013 167 871
- US-A1- 2014 261 578
- US-B1- 7 182 047

## Description

### CROSS-REFERENCE TO RELATED APPLICATIONS

The present application claims priority to U.S. Provisional Patent Application Serial No. 62/333,507, filed May 9, 2016, and U.S. Utility Patent Application No. 15/589,401, filed May 8, 2017.

### TECHNICAL FIELD

The present disclosure relates generally to a dryer assembly for a vehicle wash system. More particularly, the present disclosure relates to a dryer assembly for a vehicle wash system having a controllable gate mechanism for opening/closing a dryer inlet opening that yields improvements in energy efficiency.

### BACKGROUND OF THE DISCLOSURE

Assemblies for blowing liquids from a vehicle exterior are well known and typically include a plenum for distributing air to a plurality of nozzles, which in turn emit air toward a vehicle. The plenum is supplied air by a blower system having an inlet for drawing air in. The plenum then supplies pressurized air to the nozzles. The blower system typically includes an impeller that is rotated in a housing by an electric motor. The impeller can act as a pump or compressor to pressurize air as it enters the plenum and then force it to and out the nozzles.

These high volume air blowers are known to be quite noisy during operation and also consume considerable electric power when running at full capacity. As is also known, there are significant periods during operation of a vehicle wash where there is no demand for a dryer system to blow liquid from a vehicle, i.e., when no vehicles are passing through the vehicle wash system or are being treated by other wash components. As it is generally detrimental to an electric motor to frequently start and stop, approaches for reducing the airflow output from the device without shutting off the motor have been attempted.

Among these approaches have included pivoted damper plates disposed at the blower inlet (or the outlet) to vary flow through the device. Such an approach yields a bulky and complicated device particularly since the inclusion of a rotatable gate must still accommodate a safety mesh typically installed over the inlet to prevent objects from entering the plenum or a person from reaching into the blower interior, which could result in an injury. In operation, these dampers generally rotate 90 degrees between a closed position where the faces of the dampers generally overlie the blower inlet and an open position where only the edges of the dampers face the blower inlet such that the air inlet is substantially exposed.

Another approach involves mounting a sliding gate adjacent the blower inlet, which may be moved linearly to cover/expose the inlet. However, this arrangement likewise is complex and bulky requiring space for the gate to slide to one side of the blower inlet such that it is fully exposed to allow air to enter the housing. Thus, a significant range of movement is required to slide the gate to open and close the inlet opening, which must be accomplished against large frictional resistance.

While other approaches for reducing/limiting dryer output when unnecessary have also been devised, they all suffer from a variety of disadvantages. For example, these approaches often fail to provide an efficient seal between the closure mechanism and the blower inlet, which still results in the motor operating unnecessarily at all times as air can still be drawn into the air inlet. This inefficient seal can even cause the blower motor to work harder, when the gate mechanism is disposed over which can decrease the life of the blower. Additionally, these approaches are generally bulky and thus expensive which makes them disadvantageous.

US2006218818 A1, US2014261578 A1, US2013167871 A1 disclose different apparatuses for blowing a liquid from a vehicle exterior.

### SUMMARY OF THE DISCLOSURE

It is therefore an aspect of the present disclosure to provide a blower assembly with an improved gate mechanism for selectively opening and closing an inlet opening to prevent air from being drawn into the blower assembly when the output of air is not needed.

It is another aspect of the present disclosure to provide a blower assembly with an improved gate mechanism that decreases the need for electrical power usage and provides improved power efficiency.

It is still another aspect of the present disclosure to provide a blower assembly with an improved gate mechanism that decreases the typical cost of operation.

It is still yet another aspect of the disclosure to provide a blower assembly with an improved gate mechanism that can more effectively seal a blower air inlet in a closed position to prevent air from being drawn therein.

The invention achieves the above aspects by means of an air blowing device according to claim 1. Optional embodiments also belonging to the invention are described in the dependent claims.

### BRIEF DESCRIPTION OF THE DRAWINGS

Other aspects of the present disclosure will be readily appreciated, as the same become better understood by reference to the following detailed description when considered in connection with the accompanying drawings wherein:
FIG 1 is a perspective view of a dryer unit constructed in accordance with known prior art;
FIG 2 is an exploded view of a dryer unit constructed in accordance with known prior art;
FIG 3 is a perspective view of a dryer unit with an inlet gate mechanism in a closed position in accordance with an aspect of the present disclosure;
FIG 4 is a perspective view of a dryer unit with an inlet gate mechanism in an open position in accordance with an aspect of the present disclosure;
FIG 5 is a front view of an inlet gate mechanism for a dryer unit in an open position in accordance with an aspect of the present disclosure;
FIG 6 is a front view of an inlet gate mechanism for a dryer unit in a partially closed position in accordance with an aspect of the present disclosure;
FIG 7 is a front view of an inlet gate mechanism for a dryer unit in a closed position in accordance with an aspect of the present disclosure;
FIG 8 is an exploded view of inlet gate mechanism for a dryer unit in accordance with an aspect of the present disclosure; and
FIG 9 is a rear view of an inlet gate mechanism for a dryer unit in a closed position in accordance with an aspect of the present disclosure.

### DETAILED DESCRIPTION OF THE DISCLOSURE

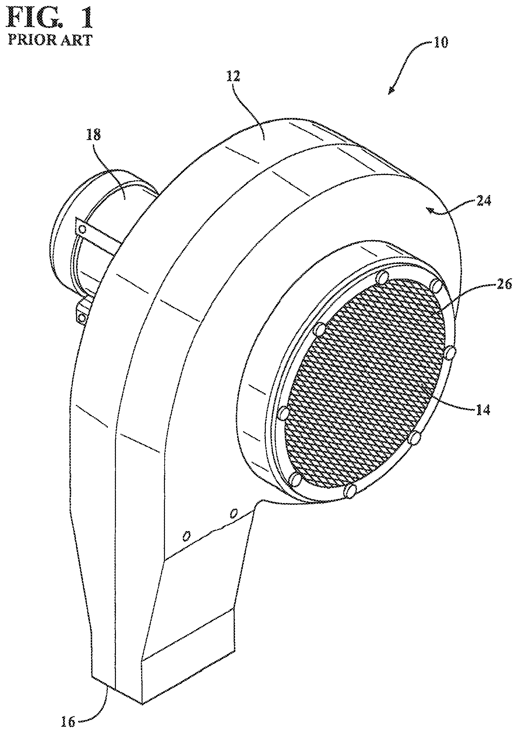

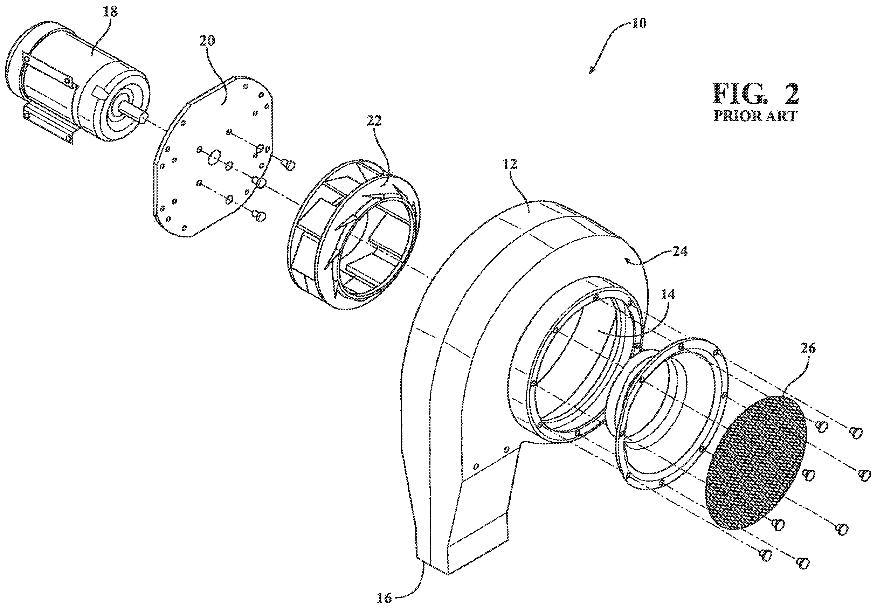

FIGs 1 and 2 illustrate a conventional dryer unit **10** constructed in accordance with the prior art. As shown, the dryer unit **10** includes a housing **12** having an air inlet **14** and an air outlet **16.** The air inlet **14** includes a motor unit **18** mounted to a housing back plate **20,** which in turn is secured to the housing **12.** The motor unit **18** is in communication with an impeller **22** disposed in an upper portion **24** of the housing **12.** The motor unit **18** can effectuate rotation of the impeller **22** to draw air into the housing **12** through the air inlet **14.** The inlet opening **14** includes a screen layer **26** disposed thereover such that debris will not be drawn into the housing **12** when air is drawn in through the inlet opening **14.** Air drawn into the housing **12** through rotation of the impeller **22** is emitted through the air outlet **16.** The motor unit **18** is communication with a controller to effect operation of the motor unit **16.**

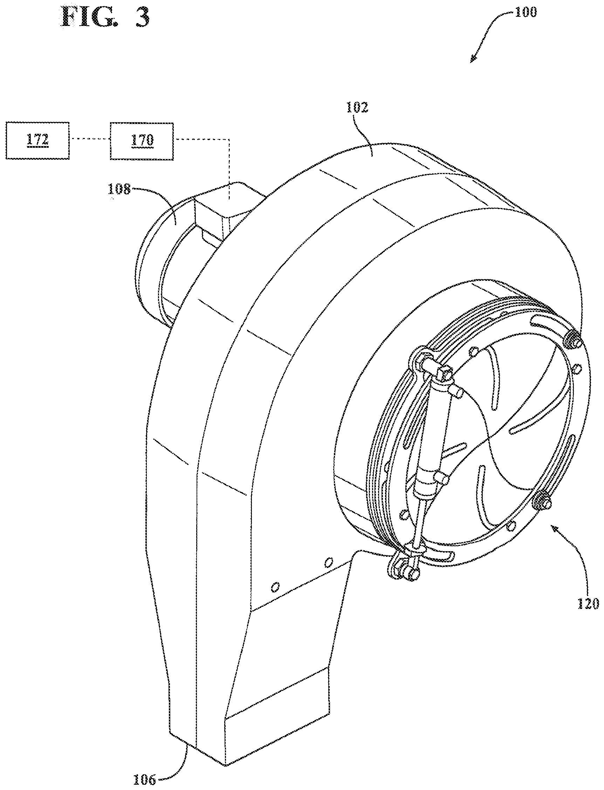

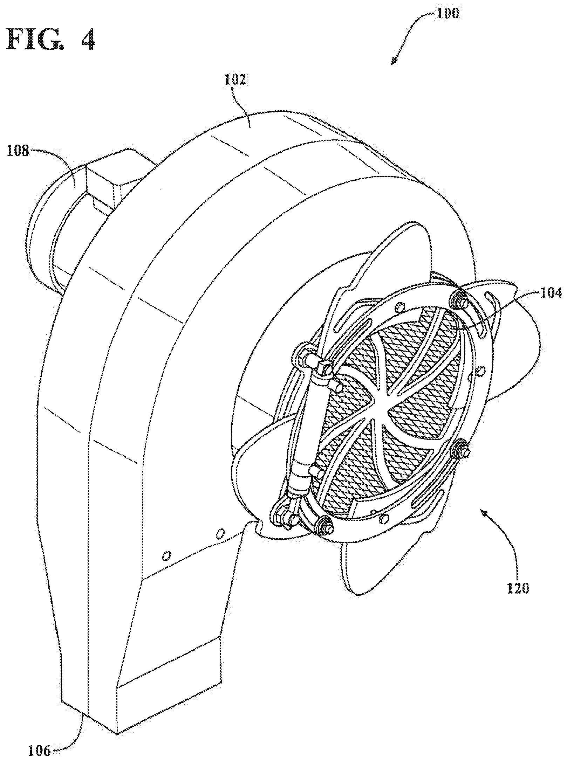

FIGs 3 and 4 illustrate a dryer unit **100** in accordance with aspects of the present disclosure. According to an aspect, the dryer unit **100** may be part of a dryer assembly that is utilized as part of a vehicle wash system to remove water from a vehicle exterior. It will be appreciated that the dryer unit **100** may be incorporated into various types of vehicle wash systems, including automatic, in-bay and/or self-service wash systems. It will also be appreciated that the dryer unit **100** may be utilized in connection with a variety of other applications. The dryer unit **100** can have a plurality of individual dryer units mounted in different locations to emit air to contact different vehicle surfaces. The dryer unit **100** may be stationary or it may be pivotable as set forth in Applicant's concurrently filed patent application entitled "A Vehicle Rinse Assembly For Emitting Air and Water", Serial No. 15/589,499.

As shown, the dryer unit **100** can include a housing **102** with an air inlet **104** and an air outlet **106.** The dryer unit **100** can include a motor unit **108** that is secured to the housing **102** in a variety of known fashions. According to an aspect, the motor unit **108** may be in communication with an impeller **110** located within the housing **102** and disposed adjacent the air inlet **104** to draw air into the housing **102** as the impeller **110** rotates. It will be appreciated that the motor unit **108** could be of any of a variety of suitable types. It will also be appreciated that a variety of other suitable ways to draw air into the housing may be employed. Air drawn into the housing **102** can be emitted through the air outlet **106** and directed to contact a vehicle exterior. The air outlet may have a variety of different configurations. It will be appreciated that the housing **102** could have multiple outlets with varying configurations. The housing **102** can be constructed of a variety of different materials. The housing **102** may also be formed of a translucent material such that light sources can be disposed within the housing and light emitted from the light sources can be transmitted through the housing such that it is seen by vehicles in the wash system.

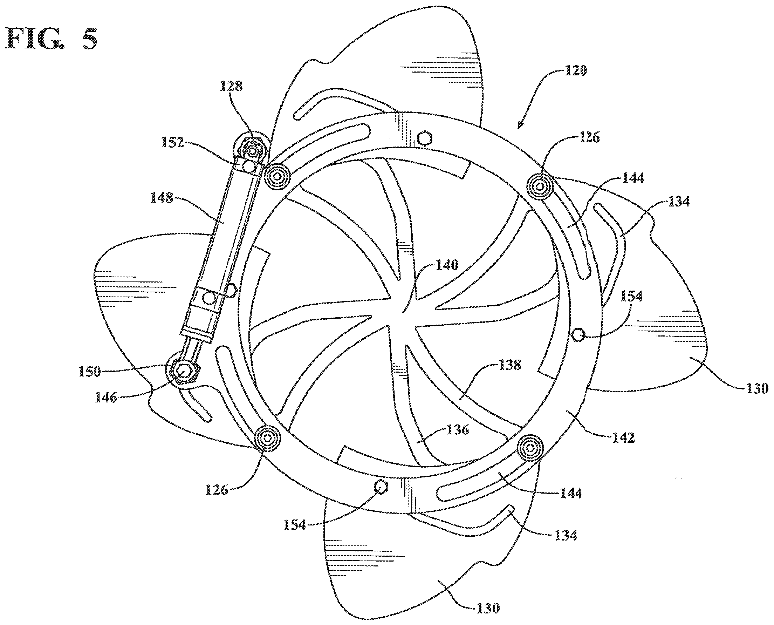

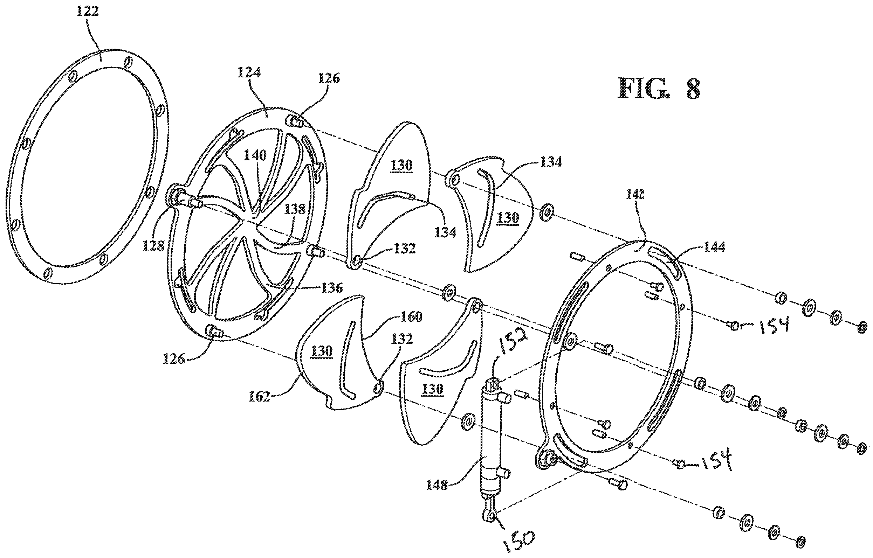

According to an aspect, a gate mechanism **120** may be secured to the housing **102** and configured to communicate with the air inlet **104.** As best shown in FIGs 5 through 9, the gate mechanism **120** can include a sealing gasket **122** that engages an outer surface of the housing **102.** The sealing gasket **122** can be formed of elastomeric material or from a variety of other suitable materials. To ensure that air is prevented from being drawn into the housing **102** at the attachment of the gate mechanism **120** to the housing **102.** A spoke ring **124** may be aligned with the sealing gasket **122** and secured to the housing **102** such that it remains fixedly secured thereto in on position. The spoke ring **124** may include a plurality of pedal pivots **126** and an inner cylinder mount **128.** According to an aspect, a plurality of shutoff pedals **130** may be in rotational communication with the pedal pivots **126** each at a respective inner attachment point **132.** Each of the shutoff pedals **130** can include a pedal drive slot **134** formed in a face thereof. Additionally, the spoke ring **124** can include a plurality of pedal drive slot sealing spokes **136** and a plurality of pedal edge sealing spokes **138** each extending generally from a periphery of the spoke ring **124** to a center hub **140** thereof.

According to an aspect, the gate mechanism **120** can include an outer drive ring **142** in rotational engagement with the spoke ring **124.** The outer drive ring **142** can include a plurality of drive slots **144** that each receive one of the pedal pivots **126** therein. The outer drive ring **142** can include an outer cylinder mount **146.** As shown, a cylinder rod **148** may have a first end **150** secured to the outer cylinder mount **146** and a second end **152** secured to the inner cylinder mount **128.** According to another aspect, the outer drive ring **142** can include a plurality of pedal drive pins **154** that are disposed within a respective one of the pedal drive slots **134.** The cylinder rod **148** may be in communication with a controller **170** to selectively actuate the cylinder rod **148** between an extended position and a retracted position in order to close or open the air inlet **104** as directed. It will also be appreciated that a variety of other suitable mechanism can be employed to actuate the cylinder rod **148.**

In operation, as shown in FIG 5, with the gate mechanism **120** in the fully open position, the cylinder rod **148** may be in a retracted position such that the shutoff pedals **130** are rotated about their respective pedal pivots **126** such they are moved to a position where they do not overlie (are retracted away from) the air inlet **104.** As shown in FIG 4, the shutoff pedals **130** may be disposed outside the housing **102** such that space to accommodate their retraction within the housing **102** is not a concern. In the fully open position, the pedal pivots **126** may be located at a first edge **156** of the drive slots **144.**

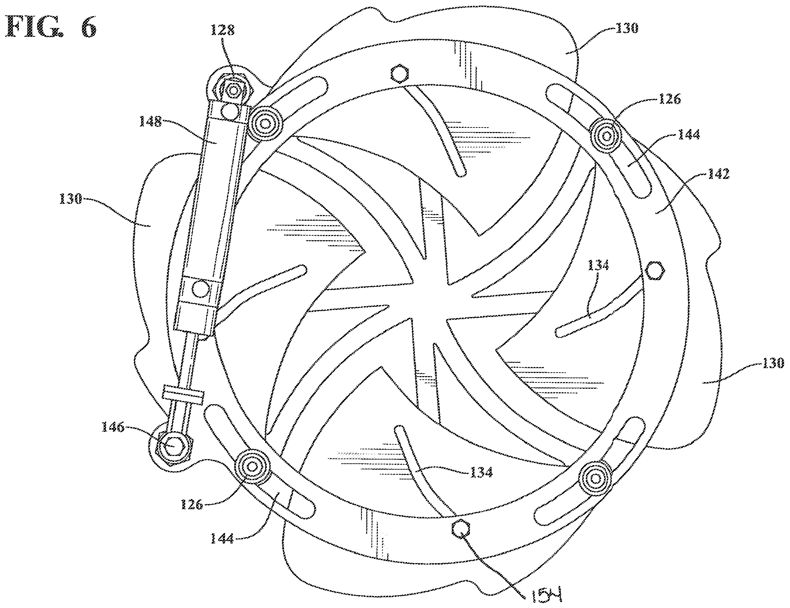

According to an aspect, as the cylinder rod **148** is actuated and moved away from the fully retracted position, the gate mechanism **120** may begin to close off the air inlet **104.** As shown in FIG 6, as the cylinder rod **148** begins to extend, the outer drive ring **142** is moved (rotated) with respect to the inner spoke ring **124** in a counter-clockwise direction as generally indicated by Arrow A. According to an aspect, the inner cylinder mount **128** remains stationary and the outer cylinder mount **146** moves to rotate the drive ring **142** in a counter-clockwise direction. As the drive ring **142** rotates, the drive slots **144** can slide with respect to the pedal pivots **126.** As shown, the pedal pivots **126** may be generally disposed in the middle of the drive slots **144.** As the drive ring **142** rotates, the drive pins **154** can move therewith and cause the shutoff pedals **130** to pivot inward about their inner attachment point **132.** As the shutoff pedals **130** pivot to cover the air inlet **104,** the pedal drive pins **154** move within (along a length of) the pedal drive slots **134.**

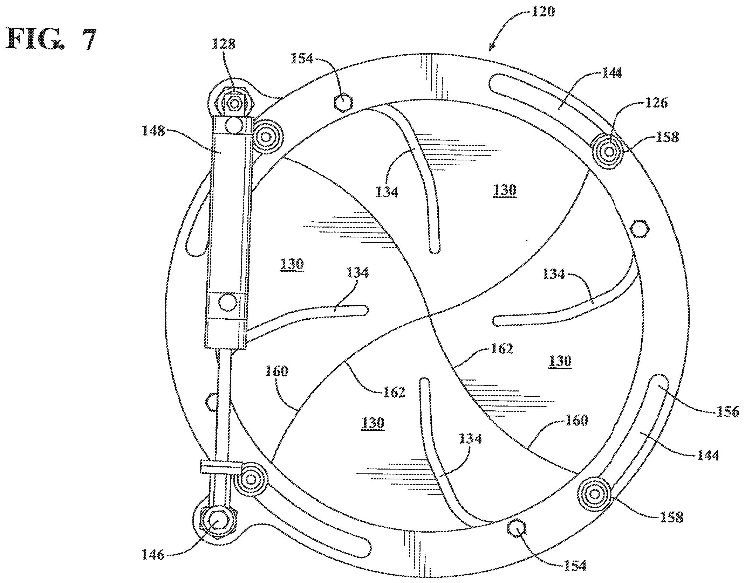

According to a further aspect, as the cylinder rod **148** is moved to the fully extended position (shown in FIG 7), the air inlet **104** may be fully closed such that air cannot be drawn into the housing **102.** When the cylinder rod **148** is in the fully extended position, the outer drive ring **142** can be fully rotated such that the drive slots **144** can be moved to a position where the pedal pivot points **126** are located at the second edge **158** of the drive slots **144.** In this position, the shutoff pedals **130** have pivoted about their attachment points **132** to a position where the shutoff pedals **130** can mate to fully close off the air inlet **104.** The interaction of the drive pins **154** with the pedal drive slots **134** assist with the movement of the shutoff pedals **130** to a fully closed positon where the shutoff pedals **130** contact each other. More specifically, a front edge **160** of one shutoff pedal **130** contacts a back edge **162** of an adjacent shutoff pedal **130.** It will also be appreciated that the edges **160, 162** of adjacent shutoff pedals **130** can overlap one another to prevent airflow through the air inlet **104.**

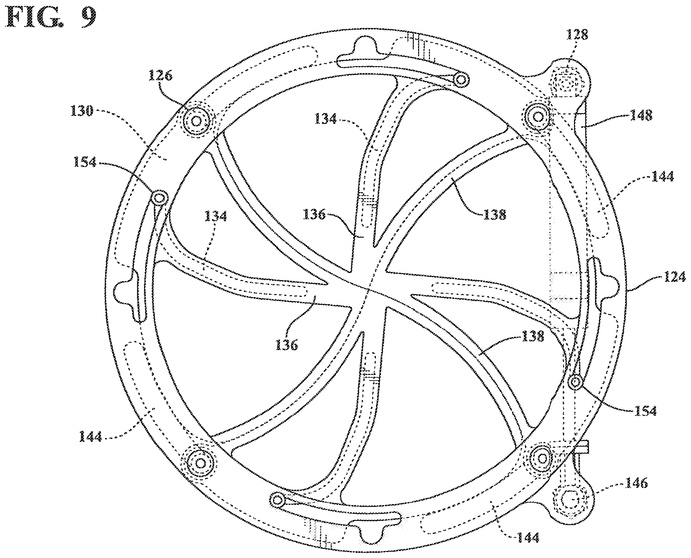

According to an aspect and with reference to FIG 9, when the gate mechanism **120** is in the fully closed position, a respective one of the pedal drive slot sealing spokes **136** can be disposed behind each of the pedal drive slots **134** such that air cannot be drawn into the air inlet **104** through the open pedal drive slots **134** when in the fully closed position. As also shown in FIG 9, the pedal edge sealing spokes **138** can lie behind the location where the edges **160** and **162** of adjacent shutoff pedals **130** meet. This can also serve to prevent air from being drawn into the air inlet **104** through any gap between the edges **160, 162.**

The gate mechanism **120** can be in communication with a controller **170** to effectuate actuation of the cylinder rod **148** between the retracted position and the extended position in order to open and close the air inlet **104.** This allows the dyer unit **100** to significantly reduce the amount of work being done without requiring the motor unit **108** to be turned on and off. In other words, when the gate mechanism **120** is in the closed position, air is prevented from being drawn into the air inlet **104** and thus out the air outlet **106** despite the motor unit **108** continuing to run. This allows for the dryer unit **108** to be selectively operated only when necessary, which results in decreased energy use and thus decreased operating costs for the wash system.

According to another aspect, controller **170** may be in communication with a sensor **172** or other detecting device that can determine the location of a vehicle with respect to the vehicle treatment area. Based on the detected location of a vehicle as received from the detecting device, the controller **170** can direct the gate mechanism **120** to open or close off the air inlet **104.** According to an aspect, the controller **170** can direct the gate mechanism **120** to close off the air inlet **104** when there is no vehicle located in the vehicle treatment area or adjacent the dryer unit **100.** It will also be appreciated that the detection device may also be configured to detect a vehicle configuration and direct the opening and closing of the gate mechanism **120** based on this information. For example, the detection device can detect that a vehicle in the vehicle treatment area is a pickup truck or open bed truck. Armed with this information, the controller **170** can direct the gate mechanism **120** to open the air inlet **104** for drying the front portion and cab of the truck and also to close off the air inlet **104** such that no air is blown into the open bed of the truck. This can prevent disturbing any items in the bed of the pickup truck.

## Claims

1. An air blowing device for a vehicle wash, comprising:
a housing (102) having an air inlet (104) and an outlet (106);
a motor assembly disposed adjacent the air inlet (104) and in communication with an impeller, the impeller (110) configured to draw air into the housing (102);
a gate mechanism (120) in communication with the air inlet (104), the gate mechanism (120) including a plurality of pedals (130) that are pivotable to move in a plane between a first position where the plurality of pedals (130) are positioned to allow air to flow through the air inlet (104) and a second position where the plurality of pedals (130) are disposed over the air inlet (104) to block air from flowing into the housing (102) through the air inlet (104);
a controller (170); and
an actuator in communication with the plurality of pedals (130) to selectively move them between the first position and the second position; wherein the actuator is in communication with the controller (170),
**characterised in that:**
the pedals (130) are rotatable about respective pedal pivots (126);
the device further comprises a detecting device for determining the position of a vehicle;
the controller (170) is configured to direct the actuator to move the plurality of pedals(130) to the first position when a vehicle is in a first predetermined position with respect to the air blowing device and configured to direct the actuator to move the pedals (130) to the second position when the vehicle is in a second predetermined position with respect to the air blowing device.

2. The air blowing device of claim 1, wherein, in the first position, the plurality of pedals (130) are moved to a position such that a forward surface of each pedal is disposed adjacent a perimeter of the air inlet (104).

3. The air blowing device of claim 1, wherein, in the first position, a trailing surface of each of the plurality of pedals (130) remains within a footprint of the housing (102).

4. The air blowing device of claim 1, wherein the actuator is a hydraulic cylinder.

5. The air blowing device of claim 1, wherein each of the plurality of pedals (130) include an inner surface that has a generally arcuate shape.

6. The air blowing device of claim 1, wherein the gate mechanism (120) further includes an inner stationary ring secured to the outer surface of the housing (102) and an outer ring that is rotatably secured to the inner ring; and wherein the plurality of pedals (130) are pivotally secured to the inner ring.

7. The air blowing device of claim 6, further comprising:
an actuator in communication with the inner ring and the outer ring to cause rotation of the outer ring with respect to the inner ring thereby pivoting the plurality of pedals (130) between the first position and the second position.

8. The air blowing device of claim 7, wherein the actuator is a cylinder having a first end secured to the inner ring and a second end secured to the outer ring, and wherein, in a retracted position of the cylinder, the plurality of pedals (130) are disposed in the first position and wherein, in an extended position of the cylinder, the plurality of pedals (130) are disposed in second position.

9. The air blowing device of claim 7, wherein the outer ring includes a plurality of drive pins that each communicate with a respective one of the plurality of pedals (130) and assist in pivoting the plurality of pedals (130) from the first position to the second position.

10. The air blowing device of claim 9, wherein the drive pins each slide within a slot formed in a face of a respective one of each of the plurality of pedals (130).

11. The air blowing device of claim 6, wherein the inner ring includes a plurality of sealing spokes extending inwardly from a perimeter of the inner ring, wherein the plurality of sealing spokes are configured to lie behind an intersection of adjacent ones of the plurality of pedals (130) when the plurality of pedals (130) are disposed in the second position.

12. The air blowing device of claim 9, wherein the inner ring includes a plurality of slot sealing spokes which are configured to line up with the slots formed in the face of each of the plurality of pedals (130) when the plurality of pedals (130) are disposed in the second position.

13. The air blowing device of claim 1, wherein each of the plurality of pedals (130) includes a leading surface that generally matches a shape of a trailing surface of an adjacent one of the plurality of pedals (130).

14. The air blowing device of claim 1, wherein the pedals (130) have forward surfaces and rear surfaces each having a generally arcuate shape.

## Patentansprüche

1. Luftgebläsevorrichtung für eine Fahrzeugwäsche, umfassend:
ein Gehäuse (102) mit einem Lufteintritt (104) und einem Austritt (106);
eine Motorbaugruppe, die benachbart an den Lufteintritt (104) angeordnet ist und mit einem Flügelrad in Verbindung steht, wobei das Flügelrad (110) so konfiguriert ist, dass es Luft in das Gehäuse (102) saugt;
einen Schiebermechanismus (120), die mit dem Lufteintritt (104) in Verbindung steht, wobei der Schiebermechanismus (120) eine Vielzahl von Pedalen (130) beinhaltet, die schwenkbar sind, um sich in einer Ebene zwischen einer ersten Position, in der die Vielzahl von Pedalen (130) so positioniert ist, dass Luft durch den Lufteintritt (104) strömen kann, und einer zweiten Position, in der die Vielzahl von Pedalen (130) über dem Lufteintritt (104) angeordnet ist, um zu verhindern, dass Luft durch den Lufteintritt (104) in das Gehäuse (102) strömt, zu bewegen; eine Steuerung (170); und
ein Stellglied, das mit der Vielzahl von Pedalen (130) in Verbindung steht, um sie selektiv zwischen der ersten Position und der zweiten Position zu bewegen; wobei das Stellglied mit der Steuerung (170) in Verbindung steht,
**dadurch gekennzeichnet:**
die Pedale (130) um entsprechende Pedalschwenkpunkte (126) drehbar sind;
die Vorrichtung ferner eine Erkennungsvorrichtung zum Bestimmen der Position eines Fahrzeugs umfasst;
die Steuerung (170) so konfiguriert ist, dass sie das Stellglied anweist, die Vielzahl von Pedalen (130) in die erste Position zu bewegen, wenn sich ein Fahrzeug in einer ersten vorbestimmten Position in Bezug auf die Luftgebläsevorrichtung befindet, und so konfiguriert ist, dass sie das Stellglied anweist, die Pedale (130) in die zweite Position zu bewegen, wenn sich das Fahrzeug in einer zweiten vorbestimmten Position in Bezug auf die Luftgebläsevorrichtung befindet.

2. Luftgebläsevorrichtung nach Anspruch 1, wobei in der ersten Position die Vielzahl von Pedalen (130) in eine Position bewegt wird, sodass eine vordere Fläche jedes Pedals benachbart an einen Umfang des Lufteintrittes (104) angeordnet ist.

3. Luftgebläsevorrichtung nach Anspruch 1, wobei in der ersten Position eine nachlaufende Fläche jedes der Vielzahl von Pedalen (130) innerhalb einer Aufstandsfläche des Gehäuses (102) bleibt.

4. Luftgebläsevorrichtung nach Anspruch 1, wobei das Stellglied ein Hydraulikzylinder ist.

5. Luftgebläsevorrichtung nach Anspruch 1, wobei jedes der Vielzahl von Pedalen (130) eine Innenfläche beinhaltet, die eine generell bogenförmige Form hat.

6. Luftgebläsevorrichtung nach Anspruch 1, wobei der Schiebermechanismus (120) ferner einen inneren stationären Ring, der an der Außenfläche des Gehäuses (102) befestigt ist, und einen äußeren Ring, der drehbar an dem inneren Ring befestigt ist, beinhaltet; und wobei die Vielzahl von Pedalen (130) schwenkbar an dem inneren Ring befestigt ist.

7. Luftgebläsevorrichtung nach Anspruch 6, ferner umfassend:
ein Stellglied, das mit dem Innenring und dem Außenring in Verbindung steht, um eine Drehung des Außenrings in Bezug auf den Innenring zu bewirken, wodurch die Vielzahl von Pedalen (130) zwischen der ersten Position und der zweiten Position geschwenkt wird.

8. Luftgebläsevorrichtung nach Anspruch 7, wobei das Stellglied ein Zylinder ist, mit einem ersten Ende, das an dem Innenring befestigt ist, und einem zweiten Ende, das an dem Außenring befestigt ist, und wobei in einer zurückgezogenen Position des Zylinders die Vielzahl von Pedalen (130) in der ersten Position angeordnet ist und wobei in einer ausgefahrenen Position des Zylinders die Vielzahl von Pedalen (130) in der zweiten Position angeordnet ist.

9. Luftgebläsevorrichtung nach Anspruch 7, wobei der äußere Ring eine Vielzahl von Antriebsstiften beinhaltet, die jeweils mit einem entsprechenden der Vielzahl von Pedalen (130) in Verbindung stehen und das Schwenken der Vielzahl von Pedalen (130) aus der ersten Position in die zweite Position unterstützen.

10. Luftgebläsevorrichtung nach Anspruch 9, wobei die Antriebsstifte jeweils in einem Schlitz gleiten, der in einer Seite eines entsprechenden Pedals der Vielzahl von Pedalen (130) ausgebildet ist.

11. Luftgebläsevorrichtung nach Anspruch 6, wobei der Innenring eine Vielzahl von Dichtungsspeichen beinhaltet, die sich von einem Umfang des Innenrings nach innen erstrecken, wobei die Vielzahl von Dichtungsspeichen so konfiguriert ist, dass sie hinter einem Schnittpunkt benachbarter der Vielzahl von Pedalen (130) liegt, wenn die Vielzahl von Pedalen (130) in der zweiten Position angeordnet ist.

12. Luftgebläsevorrichtung nach Anspruch 9, wobei der Innenring eine Vielzahl von Schlitzdichtungsspeichen beinhaltet, die so konfiguriert sind, dass sie mit den Schlitzen, die in der Seite jedes der Vielzahl von Pedalen (130) ausgebildet sind, ausgerichtet sind, wenn die Vielzahl von Pedalen (130) in der zweiten Position angeordnet ist.

13. Luftgebläsevorrichtung nach Anspruch 1, wobei jedes der Vielzahl von Pedalen (130) eine vorlaufende Fläche beinhaltet, die generell der Form einer nachlaufenden Fläche eines benachbarten der Vielzahl von Pedalen (130) entspricht.

14. Luftgebläsevorrichtung nach Anspruch 1, wobei die Pedale (130) vordere Flächen und hintere Flächen aufweisen, die jeweils eine generell bogenförmige Form aufweisen.

## Revendications

1. Un dispositif de ventilation pour le lavage d'un véhicule, comprenant :
une enveloppe (102) possédant une entrée d'air (104) et une sortie (106) ;
un ensemble moteur placé à côté de l'entrée d'air (104) et en communication avec une pale, la pale (110) configurée pour aspirer de l'air à l'intérieur de l'enveloppe (102) ;
un mécanisme pour ouvrir/fermer (120) en communication avec l'entrée d'air (104), le mécanisme pour ouvrir/fermer (120) comprenant une pluralité de pédales (130) qui sont pivotantes pour se déplacer dans un plan entre une première position où la pluralité de pédales (130) sont positionnées pour permettre à l'air de passer dans l'entrée d'air (104) et une seconde position où la pluralité de pédales (130) sont disposées sur l'entrée d'air (104) pour bloquer l'air et l'empêcher de passer dans l'enveloppe (102) via l'entrée d'air (104) ;
un contrôleur (170) ;et
un actionneur en communication avec la pluralité de pédales (130) pour les déplacer de manière sélective entre la première position et la seconde position ; dans lequel l'actionneur est en communication avec le contrôleur (170),
**caractérisé parce que** :
les pédales (130) sont rotatives autour de pivots de pédale (126) respectifs ;
le dispositif comprend en outre un dispositif de détection pour déterminer la position d'un véhicule ;
le contrôleur (170) est configuré pour ordonner à l'actionneur de déplacer la pluralité de pédales (130) sur la première position lorsqu'un véhicule est dans une première position prédéterminée par rapport au dispositif de ventilation et configuré pour ordonner à l'actionneur de déplacer les pédales (130) sur la seconde position lorsque le véhicule est dans une seconde position prédéterminée par rapport au dispositif de ventilation.

2. Le dispositif de ventilation de la revendication 1, dans lequel, dans la première position, la pluralité de pédales (130) sont déplacées sur une position de façon qu'une surface avant de chaque pédale soit placée à côté d'un périmètre de l'entrée d'air (104).

3. Le dispositif de ventilation de la revendication 1, dans lequel, dans la première position, une surface arrière de chacune de la pluralité des pédales (130) reste à l'intérieur d'une zone couverte par l'enveloppe (102).

4. Le dispositif de ventilation de la revendication 1, dans lequel l'actionneur est un vérin hydraulique.

5. Le dispositif de ventilation de la revendication 1, dans lequel chacune de la pluralité des pédales (130) comporte une surface interne qui est de forme généralement arquée.

6. Le dispositif de ventilation de la revendication 1, dans lequel le mécanisme pour ouvrir/fermer (120) comprend en outre un anneau interne immobile fixé à la surface externe de l'enveloppe (102) et un anneau externe qui est fixé de manière rotative à l'anneau interne ; et dans lequel la pluralité de pédales (130) sont fixées de manière pivotante à l'anneau interne.

7. Le dispositif de ventilation de la revendication 6, comprenant en outre :
un actionneur en communication avec l'anneau interne et l'anneau externe pour provoquer la rotation de l'anneau externe par rapport à l'anneau interne par ce moyen faisant pivoter la pluralité de pédales (130) entre la première position et la seconde position.

8. Le dispositif de ventilation de la revendication 7, dans lequel l'actionneur est un cylindre ayant une première extrémité fixée à l'anneau interne et une seconde extrémité fixée à l'anneau externe, et dans lequel, dans une position rétractée du cylindre, la pluralité de pédales (130) sont placées dans la première position et dans lequel, dans une position étirée du cylindre, la pluralité de pédales (130) sont placées dans la seconde position.

9. Le dispositif de ventilation de la revendication 7, dans lequel l'anneau externe comporte une pluralité de tétons d'entraînement dont chacun communique avec une pédale respective de la pluralité de pédales (130) et contribue à faire pivoter la pluralité de pédales (130) de la première position à la seconde position.

10. Le dispositif de ventilation de la revendication 9, dans lequel chacun des tétons d'entraînement glisse à l'intérieur d'une fente formée dans une face d'une pédale respective de la pluralité de pédales (130).

11. Le dispositif de ventilation de la revendication 6, dans lequel l'anneau interne comporte une pluralité de rayons d'étanchéité s'étendant vers l'intérieur depuis un périmètre de l'anneau interne, dans lequel la pluralité de rayons d'étanchéité sont configurés pour être situés derrière une intersection de pédales adjacentes de la pluralité de pédales (130) lorsque la pluralité de pédales (130) sont placées dans la seconde position.

12. Le dispositif de ventilation de la revendication 9, dans lequel l'anneau interne comporte une pluralité de rayons d'étanchéité de fente qui sont configurés pour être alignés avec les fentes formées dans la face de chacune de la pluralité de pédales (130) lorsque la pluralité de pédales (130) sont placées dans la seconde position.

13. Le dispositif de ventilation de la revendication 1, dans lequel chacune de la pluralité de pédales (130) comporte une surface avant qui correspond de façon générale à une forme d'une surface arrière d'une pédale adjacente de la pluralité de pédales (130).

14. Le dispositif de ventilation de la revendication 1, dans lequel les pédales (130) possèdent des surfaces avant et des surfaces arrière chacune étant de forme généralement arquée.
